# EUROPEAN PATENT SPECIFICATION

(11) **EP 4 305 502 B1**
(45) Date of publication and mention of the grant of the patent: **04.06.2025**
(21) Application number: 22710445.2
(22) Date of filing: 10.03.2022
(51) Int. Cl.: G05D 23/19, G05D 23/24, F24H 9/20, H01H 37/00

(54) **INTEGRATED THERMOSTAT WITH REGULATION**
INTEGRIERTER THERMOSTAT MIT REGELUNG
THERMOSTAT INTÉGRÉ À RÉGULATION

(30) Priority: 11.03.2021 IT 202100005786
(43) Date of publication of application: 17.01.2024
(73) Proprietor: ARISTON S.P.A., 60044 Fabriano (AN) (IT); Thermowatt S.p.A., 60011 Arcevia (IT)
(72) Inventor: COACCI, Gianluca, 60035 Jesi (IT); ROTILI, Rudy, 60018 Montemarciano (IT); MORECI, Renato, 60044 Fabriano (IT); NERI, Giampaolo, 60019 Senigallia (IT); VIVIANI, Simone, 60044 Fabriano (IT)
(74) Representative: Mar.Bre S.r.l.
(86) International application number: PCT/IB2022/052139
(87) International publication number: WO 2022/190023

(56) References cited:
- WO-A1-95/29368
- US-A1- 2004 177 817
- US-A1- 2013 257 570
- US-B1- 6 531 952

## Description

The present invention relates to a device for controlling the water heating temperature in appliances which in particular are storage water heaters and even more particularly, suitable for hygienic-sanitary and electric heating uses.

Such temperature control devices comprise: water heating means; a control device that regulates the temperature around a target value that may be set by the user with at least one knob or equivalent means.

Hereinafter, "user regulation" indicates the setting of the target temperature that may be performed by the user and "thermostatic control" the on/off control of the heating elements by the thermostat.

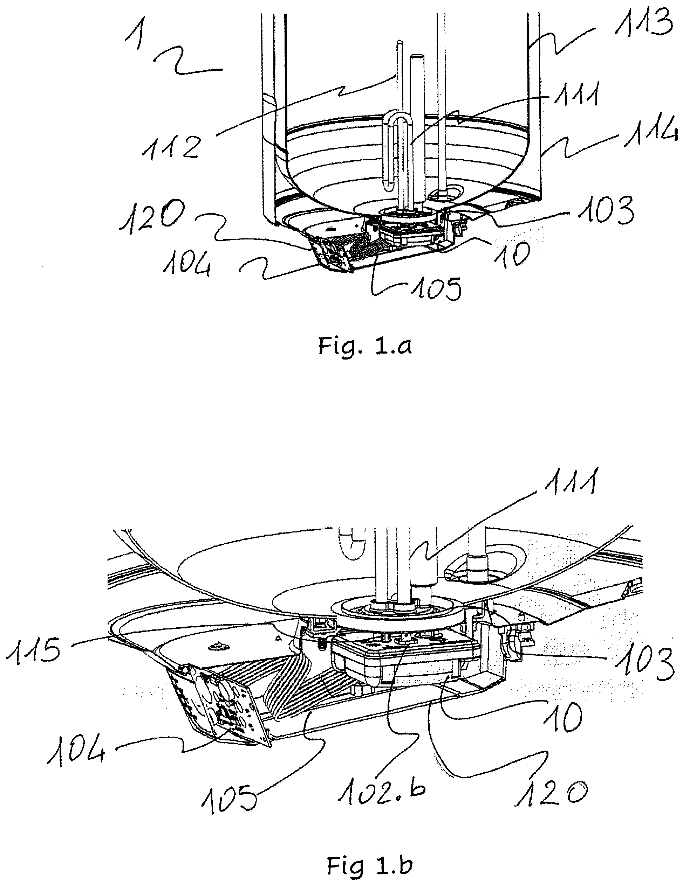

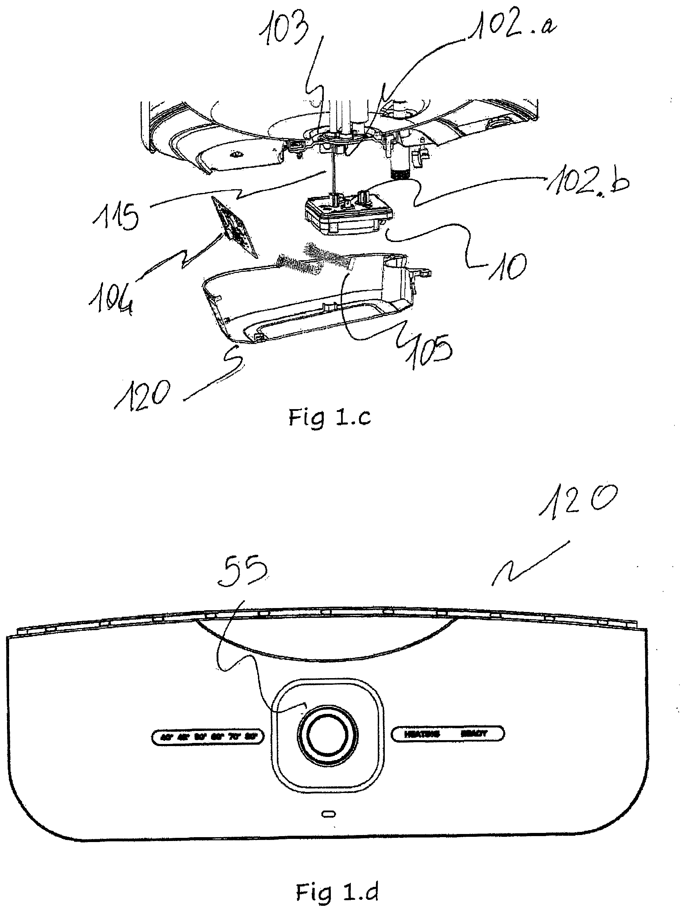

In order to explain more clearly the state of the art in the field of the invention, hereinafter the Figs. 1.a, 1.b, 1.c and 2 are used without any limiting or omitting intent of the prior art.

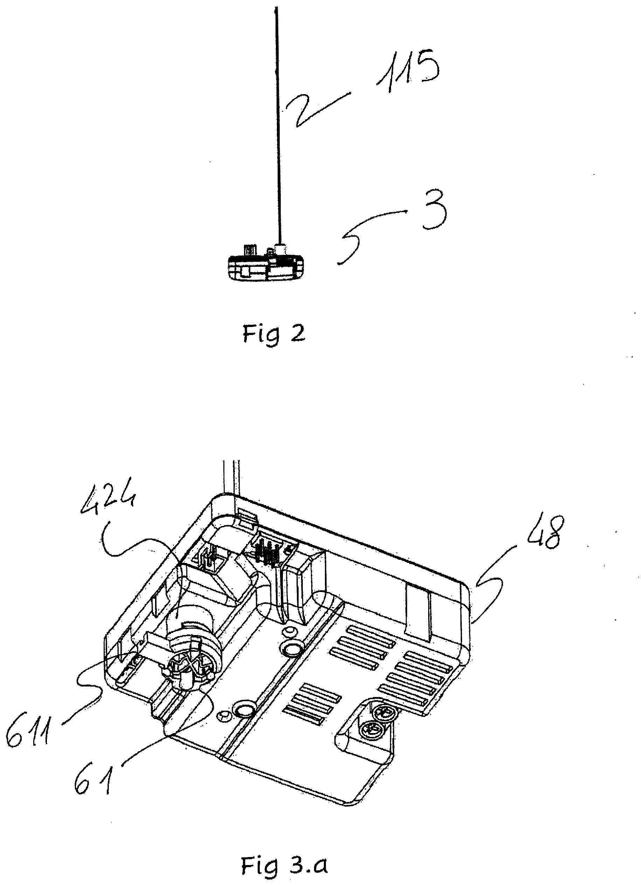

Traditionally, according to the most widespread state of the art, said temperature control devices use the electromechanical technology in which the thermostatic control is carried out with a "mechanical thermostat" with thermostatic control function ("thermoregulator thermostat" or "thermoregulator") and the temperature setting may be achieved with a manual setting means accessible to the same user and mechanically coupled to said thermostat. Said mechanical thermostat is connected with known means, for example two faston connectors, to the heating elements and to the temperature probe (see Fig 2).

By "user interface" it is meant the set of input or output elements with which the user may interact: such manual setting means and possibly equipped with indicator lights or buttons for other functions.

Following the European Energy Efficiency Regulations, intelligent algorithms have been developed that allow reducing the consumption and require control based on a microcontroller, this has led to the progressive spread of electronic devices in replacement of the mechanical ones.

In the electronic models, the mechanical thermostat for the thermostating function is replaced by an electronic thermostat 3 (controlled, for example, by a microcontroller), which:
- controls one or more electronic actuators (relays, triacs or variacs, hereinafter referred to as actuators not shown in the figure) which in turn feed the one or more electrical resistances 111 through connectors 102.b and
- receives signals from electronic temperature sensors 115 called thermistors (NTC or PTC).

The actuators and sensors 115 are part of an "actuation block", which is connected to the tank 113 in a precise position, in particular very advantageously it is connected to a flange 103 (Figure 1); said flange comprising at least the openings in which the heating resistances 111 and a sheath 112 for the temperature sensors 115, are inserted, the design thereof may be similar or identical to the previous one of the electromechanical technology.

The means for connecting the actuation block in a precise position may coincide with electric connectors 102.b at least when these are female/male faston couplings 102.a 102.b.

The temperature setting function is now accessible to the user because it is implemented through an interface board 104 whereon the input output components 50 are mounted in an easy-to-access section of an external cap 120. According to the prior art, the input output components 50 send at least one input signal by means of an electromechanical transducer such as for example an encoder, a potentiometer or a trimmer, located on the interface board. Hence, the input output components 50 are mechanically coupled with electromechanical components mounted on the board.

Said user interface board 104 also houses the connectors for the power supply and connection cables 105 at least to the actuation block and may house buttons or lights.

The electronic thermostat comprising the microcontroller (or equivalent electronic means) may be placed:
- in the same user interface board 104 connected to the actuation block by wiring 105;
- in a board, constrained to the tank 113 and substantially integrated with the actuation block because also comprising the electronic actuators and the connections to the temperature sensors 115, and connected to the user interface 104 by wiring 105 (Fig. 1.b).

In both solutions there are two electronic assemblies: one comprising at least the components of the user interface such as a transducer 50, fixed to the cap 120 and one comprising at least actuators and sensors, constrained to the tank 113 with the disadvantage of having to duplicate casings, fastening means, electrical power supply with cables 105 and relative connectors and finally specific steps for the assembly of the product.

Said electronic assemblies may also create sturdiness and reliability problems over time as they are subject to possible damages or short circuits resulting from humidity, dust, vibrations (for example, during transport). These are criticalities that increase with the increase of as the fastening means needed the surface of the electronic board to be protected.

Such duplication also increases the critical components and makes the architecture and assembly more complex.

Document WO2012/038795 describes a thermostat in which, in order to avoid duplication or use of wiring, the user interface and the actuation block are integrated in a single electronic board; according to this solution, the connectors of the board for sensors and actuators engage directly on the reciprocal connectors placed on the flange. Then the board is mechanically constrained to the flange. Since the same board also serves as a user interface, it is also mechanically constrained to the input output elements 50 which must be in a position accessible to the user. It follows that with this thermostat the position of the user interface is constrained with respect to the position of the flange and that limits the freedom in the design, requires diversifying the board to obtain models that have only aesthetic differences and requires strict mechanical tolerances between the part of the outer casing housing the user interface and the flange.

Document WO2016151382 describes a particular mechanical coupling between the temperature selector in which an external toothing, with crown section, constrains the rotation angle of the selector in order to limit the maximum temperature setting; the toothing is made so that it may be broken during use to eliminate the constraint on the maximum temperature. This expedient addresses the issue of energy saving and not the problem of the mechanical constraints set on the water heater by the need of coupling a user accessible mechanical selector to elements of an electronic board and where the electronic board:
- needs to be electronically connected to, the sensors and actuators constrained to a flange
- and which is itself conveniently constrained to the flange.

Document US20040177817A1 describes a water heater where an electronic board is provided right behind the user interface area, as shown in figure 9 and electrical wires provide the connection between the heating elements and the temperature sensors on one side and the control board (control box) on the other side.

Document WO9529368 describes a water heater where the temperature input knob is mounted on the cover plate in a position accessible to a user and is to be coupled to a mechanical thermostat, the mechanical thermostat is fixed to a wall of the tank, said wall and the water heater cover plate are not directly connected but separated by a layer of protective jacket. So there is one degree of tolerance between the mechanical thermostat and the knob. The coupling problem is solved by a tight coupling, made possible by a joint that permits a connector shaft to be rotatable and transmit a rotation to stub shaft that is angularly misaligned, but it requires a tight coupling between members of the kinematic chain, so the coupling is not easy to assemble and it is not designed to compensate for more than one degree of misalignment.

The document US 2013/0257570A1 describes a wearable night vision system comprising rotary encoders. The rotary encoders are configured to turn and slide within cylinders, thanks to internal protrusion in the cylinders, small interferences are produces when the shafts rotate in the cylinders. The interferences are not an effect of design tolerance, on the opposite they are obtained on purpose to generate a tactile feedback on the user of the device. The mechanical design is therefore very precise and the rotary selector is not subject to any particular mechanical stress nor tolerance.

Document US6531952B1 describes a knob coupled to the shaft of a rotary potentiometer and comprises a pressure operated switch which is completely decoupled from the potentiometer. The knob is hollow so it can contain in addition to the pressure operated switch light conductive guides. The knob is mounted directly on top of the electronic board and the coupling between knob and transducer does not deal with any specific tolerance issue.

The main purpose of the present invention, in said apparatus for controlling the water heating temperature of a storage water heater, is to resolve these drawbacks and eliminate at least in part the mechanical constraints between the portion of the interface that is accessible to the user and the components that are constrained to the flange; an additional purpose is to reduce connections that are critical for robustness and reliability.

A further purpose, at least of some variants of the invention, is to reduce the components and simplify the assembly of said device.

These and other objects, which shall become clear later, are achieved with an invention according to claim 1.

Other objects may also be achieved by means of the additional features of the dependent claims.

Further features of the present invention shall be better highlighted by the following description of a preferred embodiment, in accordance with the claims and illustrated, purely by way of a non-limiting example, in the annexed drawing tables, wherein:
Figure 1.a shows a section of the device for controlling the heating temperature in the water heater according to known art: an "electronic board" 10 integrated in the actuation block and a separate "user interface board" 104.
Figure 1.b shows in more detail the connection elements with the flange.
Fig 1.c is an exploded view of Figure 1.b.
Fig. 1.d shows the interface towards the user with a selector and display elements.
Fig. 2 shows an actuation block without a microcontroller with electrical connections to the heating elements, and to the temperature probe.
Fig. 3.a, 3.b and 3.b.2 show, in a compact and exploded form, a part of the device for controlling the water heating temperature according to the invention (sensors and part of the user regulation means are not shown).

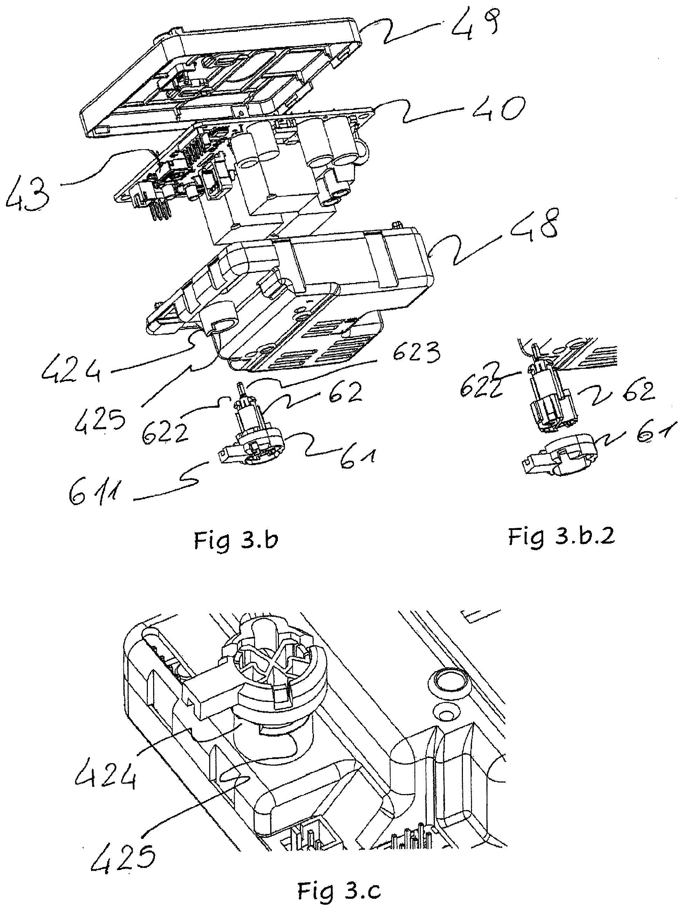

Figure 3.c shows a half-shell of the thermostat with regulation.

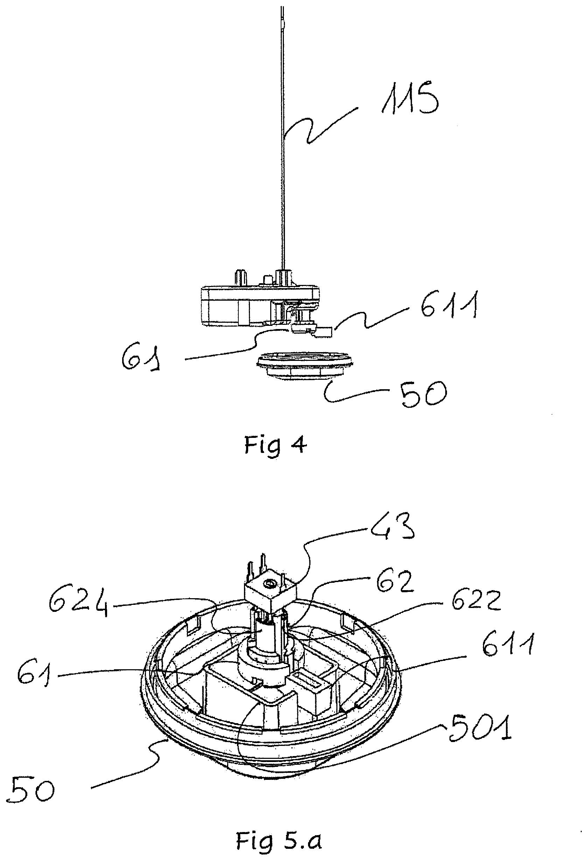

Fig. 4 shows a "thermostat with regulation" with a temperature probe 115 and the connection with a user setting means.

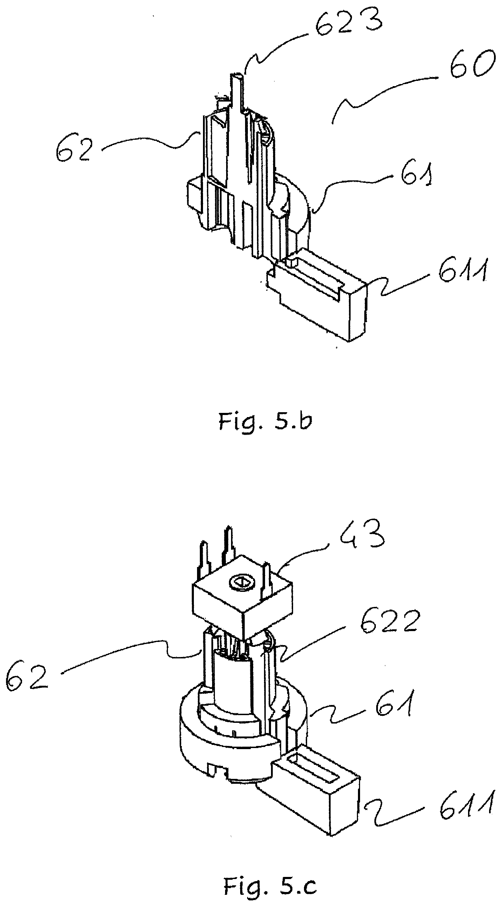

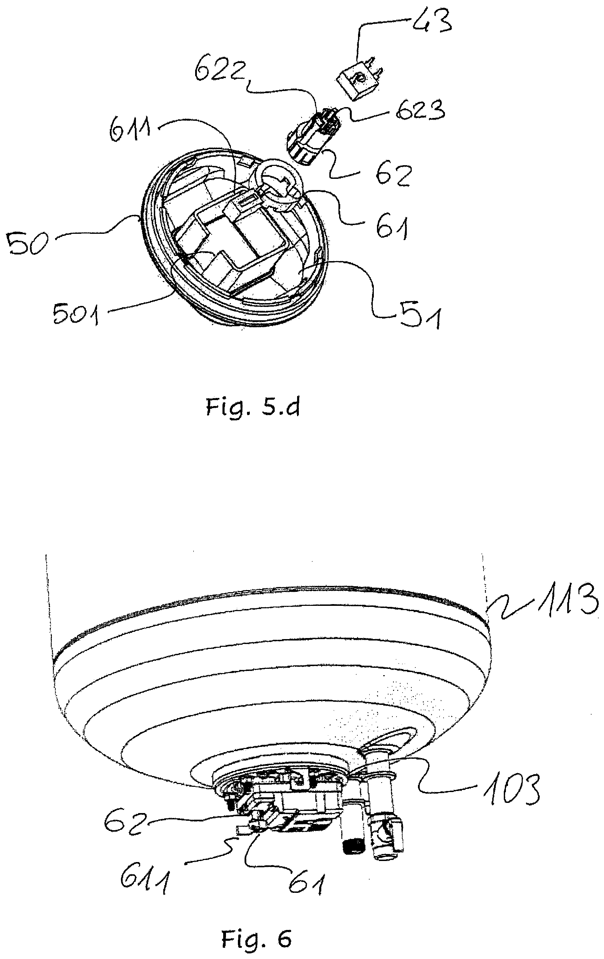

Figures 5.a and 5.d show in a compact and exploded form the connection of a user setting means with an electromechanical transducer.
Figures 5.b and 5.c show a detail of the kinematic chain in section and as a whole.
Figure 6 shows the device for controlling the water heating temperature according to the invention, connected to the flange (the sensors and part of the user regulation means are not shown).

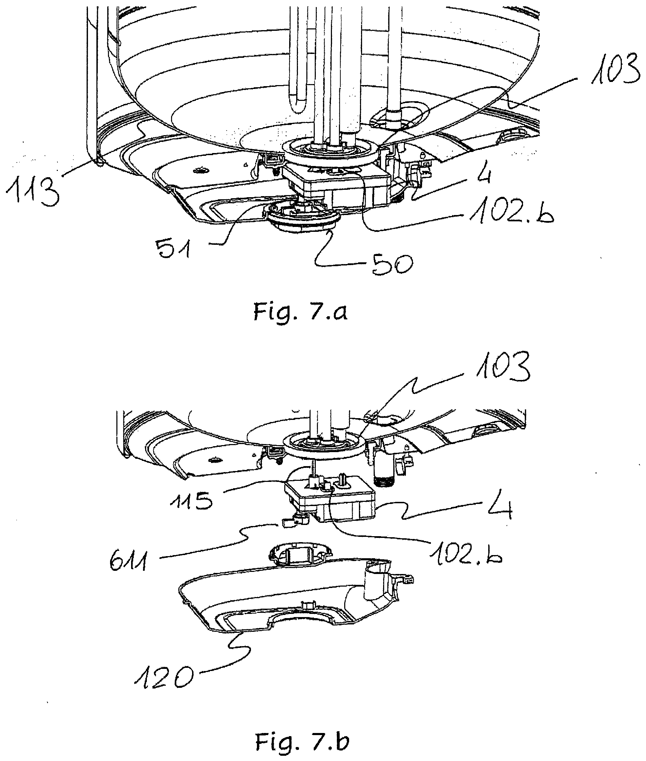

Figures 7.a and 7.b show overall and exploded section views of the invention.

Any spatial references, unless otherwise indicated, refer to how the objects are represented in the figures.

The features of a preferred variant of the invention are now described using the references in the figures. It is noted that the above figures, although schematic, reproduce the elements of the invention according to proportions among their spatial dimensions and orientations that are compatible with a possible embodiment.

According to the prior art, the connection by wiring adapts to the geometry of the system characterised by a wide mechanical tolerance between the actuation block and the selector, wherein the actuation block is constrained to the flange 103, the flange is constrained to the tank 113, the tank 113 is in turn constrained in a casing 114 a cap 120 in which the selector 50 is positioned.

According to the invention, the problem is solved by integrating the electronic assemblies in a single device, i.e., said thermostat with regulation 4 and this is made possible by a new kinematic chain actionable to regulate the temperature that overcomes the technical difficulties of the prior art.

The thermostat with regulation 4 according to the invention comprises, (see in particular the Figs. from 3 onwards):
- connections to the temperature sensors 115,
- a "thermostat board" 40 which in turn provides at least:
   - actuators and connectors 102.b where the latter may also act as a connecting element with the flange 103,
   - the microcontroller, with the necessary components and circuitry for its operation, the microcontroller (or equivalent electronic means) configured to thermostatically control the temperature,
   - connectors 102.b for said electrical heating elements 111;
   - fastening means 102.b to said flange 103;
   - an electromechanical transducer 43, such as, by way of an example, an encoder, a potentiometer or a trimmer capable of receiving a target temperature value of water, to be heated, represented by the amount of dragging of a dragged element 60, or 62 to which said electromechanical transducer 43 is coupled, and sending it to said microcontroller;
- a kinematic chain 5 which starts from a selector 50 of the target temperature couplable with a dragged element 60, in turn couplable with said electromechanical transducer 43 with which the kinematic chain 5 ends (see Figures 4, 5.a, 5.b, 5 .c, 5.d).

Said selector 50 is:
- engaged in said dragged element 60, 61;
- capable of being slidingly couplable, with at least one degree of freedom directly or indirectly to the casing 114 of the storage water heater 1 in a position accessible to the user,
- where advantageously this sliding coupling takes place with a cap 120 in turn constrained to the casing 114.

Said kinematic chain 5 comprises at least one disengageable coupling so that the assembly and disassembly of said selector 50 with respect to the dragged element 60, 61 may take place. Preferably, the disengageable coupling is that between said selector 50 and said dragged element 60, 61.

Preferably said dragged element 60 may in turn be a kinematic sub-chain composed of at least two mutually coupled parts 61, 62 of which a first part 61 couplable to said selector 50 and a second part 62 couplable to said electromechanical transducer 43.

Preferably, there are provided:
- stop means such as an end stop 424 consisting of mechanical stop means (see below) which prevent said selector 50 from forcing the electromechanical transducer 43 beyond its natural end stops;
- support means 48 of said kinematic chain 5;
- a casing of dielectric material possibly according to the prior art and made with at least one covering half-shell 48, which may usefully also act as said support means 48, and possible base half-shell 49, which protect at least said thermostat board 40.

Said thermostat with regulation 4 may have various dimensions, external shapes, mechanical constraint means and various electrical connections such as to be able to adapt and be positioned to previously available connection points in the flange 103 by means of said connectors 102 which may be the faston connections 102.a of one of the powered electrical resistances; as long as use of the thermostat with regulation 4 does not prompt possible advantageous design modifications of the tank 113 and of the flange 103 of the water heater wherein it is mounted in place of electronic board models of the prior art 10.

Said kinematic chain 5 therefore provides a dragged element 60 or at least two mutually coupled elements 61, 62 that allow a controlled movement compatible with foreseeable assembly tolerances.

The described kinematic chain has the following advantages:
- it is robust despite the mechanical assembly tolerances between the selector 50 and the transducer 43 constrained to the tank 113;
- even in presence of strong user stresses it does not damage the electromechanical transducer 43.

Such sturdiness and lack of transmission of critical stresses is obtained by providing, between the cap 120 and the electromechanical transducer 43, at least a pair of mutually coupled elements, with a "slack"-type coupling, i.e., a coupling that can accept a clearance compatible with those that are normal manufacturing and assembly tolerances of the elements involved, such as for example, those due to shifts or inaccuracies of the relative distances with respect to the design theoretical ones, but sufficient to transmit to the dragged element 60 the dragged and/or translatory movement (the latter not exemplified in the Figures) whichever is needed based on the design of the selector 50 and the electromechanical transducer 43. The object is to have sufficient clearance to avoid unwanted stresses and deformations to the elements of the kinematic chain following the selector 50 which imparts their movement.

Said clearance may be provided between any two consecutive elements, while the remaining couplings in the kinematic chain 5 are preferred to be designed with tight mechanical tolerance, also for the stability of the assembly.

According to a possible solution, said slack coupling may be obtained with a sufficient clearance between the selector 50 and the cap 120 whereon it is slidingly or rotatably mounted. A simple but not preferred solution because the user would perceive the clearance as a rough execution and may also transmit harmful efforts along the kinematic chain 5.

Therefore, it is preferred that the coupling between the selector 50 and the dragged element 60 is of the slack type, i.e., that the coupling between the selector 50 and the dragged element 60 is both of the disengageable and slack type.

Hereafter, the face of selector 50 opposite the user will be referred to as "interior" 51, and "exterior", the face towards the user; at least the following couplings are possible between the selector 50 and the dragged element:
- a slack male/female coupling where the male part is obtained in the interior 51 the selector 50 and is inserted with clearance in a female seat obtained on the dragged element 60;
- a slack female/male coupling where the female seat is obtained in the interior 51 of the selector 50 and the male part obtained on the dragged element 60 is inserted with clearance therein;
- a double fork coupling, each linked to the selector 50 and to the dragged element 60 where the teeth of said forks are inserted with clearance between each other;
- a cardan-type joint or equivalent means that allow transmitting a rotation and/or translation movement without the need for coincidence of the rotation and/or sliding and precision axes (for example a flexible steel cable).

In the preferred solution, the selector 50 is a rotatable knob 50 with a slack female/male shape coupling where said selector 50 has a "cavity" 501 in the interior 51, adapted to engage one end of the dragged element 60 which in this solution is substantially a pin, free to rotate with said selector 50 and whose opposite "dragging end" 623 is inserted in said electromechanical transducer 43, which is of the rotatable type, so as to transmit to it the rotation angle of said selector 50. For example, said cavity 501 may constrain a "fin" 611 to rotate integrally with said selector 50. Said fin 611 is obtained at one end of the dragged element 60 and it is oriented radially with respect to the rotation axis of the dragged element 60. Therefore, said fin 611 has a lever function that facilitates the rotary movement of said dragged element 60.

Advantageously, said dragged element 60 may be composed of two parts mutually couplable with each other whereof a first part 61 has a dragged end that may be coupled with said selector 50 and a second part 62 has the dragged end 623 that may be coupled with said electromechanical transducer 43. The realization with two distinct parts couplable with and constrainable to each other 61, 62 allows varying only the first part 61 coupled with the selector 50 according to the geometry of the selector 50, so that the thermostat board 40 may be used on different models of water heater 1.

The first part 61 dragged by said selector 50 may be a "lug" 61 wherein the fin 611 is obtained, the second part a "pin" 62 which in turn has a dragged end couplable with said lug 61. By lug it is meant a crown element in which the central cavity has dimensions suitable for inserting therein said pin 62, determining a shape coupling sufficiently tight so as not to allow slidings of the pin 62 with respect to the lug 61. In this solution, the lug 61 and in particular the length of the fin 611 may be made in different versions to adapt to selectors 50 with different geometries. Furthermore, said pin 62 or said lug 61 may have different heights to compensate for different distances provided between the thermostat board 40 and the selector 50. Advantageously, such variabilities between models are compensated for by the geometry of the lug 61. Nothing prevents the selector 50 from using knobs with a different geometry of the external part and the unvaried geometry for said cavity 501 in the inner part.

The dragging end 623 of said dragged element 60, 62 is suitably shaped to couple with said electromechanical transducer 43. For example, said dragging end 623 inserts into said electromechanical transducer 43 with a shape coupling.

As said, the thermostat board 40 is preferably protected by a casing comprising at least a covering half-shell 48, which provides a suitable "opening" 425 in which said pin 62 is inserted on the side of the dragging end 623 being thus capable, if needed, to act also as a guide and/or support of said pin 62. Advantageously, said pin 62 may have one or more "arms" 622 adapted to form a mechanical constraint that prevents said pin 62 from coming out of said opening 425 once it has been inserted therein. For example, said arms 622 may have a termination with an elastic snap-wise coupling. Advantageously, the length of said arms 622 is such that the elastic coupling snaps when the end 623 of the pin 62 is correctly inserted for a length sufficient for the mechanical coupling to transmit the movement to the electromechanical transducer 43 but less than that which could determine critical interferences with said transducer 43 or with the supporting printed circuit. Said electromechanical transducer 43, as known, may be of the trimmer type, with an allowed travel interval for its movable part, stresses beyond said interval may lead to breakage.

In the event that the selector 50 is a knob and the dragged element 60, 62, in particular the dragging end 623, makes a rotary movement in the opening 425, it is advantageously possible to provide mechanical stop means which constitute movement end stop means for the pin 60, 62; these may be a "curved projection" 624, that increases the radius of said pin 60, 62 for a first arc α, and an "end stop" 424 that describes a second arc β along the edge of said opening 425 such that the sum of said first arc α and said second arc β is equal to the complementary angle with respect to the travel angle of said electromechanical transducer 43. This expedient prevents mechanical stresses that may cause the same electromechanical transducer 43 to break.

Not illustrated in the figures, it is also possible to provide the already said translational rather than rotary movement of the selector 50 along guides in the cap 120, if the electromechanical transducer 43 is a trimmer of the slider type. A slack coupling may be provided between the selector 50 and the dragged element 60 and possibly a rocker arm with relative support means for the transmission of the translatory motion.

Also in the case of translatory motion, it is possible to provide an end stop 424 made with mechanical stop means which blocks the movement of said dragged element 60 before it brings the movable part of said transducer 43 beyond the allowed movement range thereof.

Thus, a thermostat with regulation 4 is made which receives the signals from the temperature sensors 115 and from a selector 50 which enables to set the target temperature.

The user interface may also provide one or more indicator lights, (for example LEDs) that may be mounted on the thermostat board 40 and are visible through a window of the user interface. The light of the indicator lights may be guided from the origin to the user interface along a light guide (i.e., wave guide) which may also provide curves; therefore there are no particular constraints between the relative positions of light origin and the transparent window located on the user interface.

This flexibility in the type of mechanical and optical coupling enables not only the use of the thermostat with regulation 4 in new water heater models 1 with interfaces of different geometry of the knobs and/or more display elements, but also the replacement in models already in production.

The invention also enables a fast and robust assembly method, which includes, by way of an example, the following steps for the variants that include the components listed below:
a) rotating or translating the movable part of the transducer 43, mounted on said thermostat board 40, so that it is at the travel end (or beginning);
b) inserting the thermostat board 40 between the "half-shells" 48 and 49 that make up the "shell" 48-49;
c) inserting the dragging end 623 of the pin 62 into the opening 425; aligning the projecting part 624 with the projection of the end stop 424; sliding the end 623 of the pin 62 into the opening 425 until the elastic coupling on the arm 622 snaps, which, once inserted creates an interference against the edge of the opening 425 that prevents the pin 62 from coming out;
d) inserting the temperature probe 115 in its housing 112;
e) constraining said thermostat board 40 by means of said fastons 102.b to said flange 103;
f) mounting the lug 61 on the pin 62;
g) mounting said cap 120 and the selector 50 at travel end (or beginning) so that it couples with the lug 61.

It is possible to carry out the step f) of mounting the lug 61 on pin 62 even before step c), in this case it is preferable to make an interlocking coupling between the lug 61 and pin 62 so that once the lug 61 and the pin 62 are coupled they remain joined.

From the above description, the advantages that may be achieved with the use of said thermostat with regulation 4 comprising said kinematic chain 5 in terms of strength, simplification of components and ease of assembly appear clear.

## Claims

1. Thermostat with regulation (4) for controlling an electrical water heating element (111) for a storage water heater (1), the storage water heater comprising a flange (103), the flange (103) configured to be constrained to a tank (113), the tank (113) configured to be constrained to a casing (114), the casing (114) constrained to a cap (120), the cap (120) being coupled with a selector (50) of a target temperature for water in the storage water heater (1), the thermostat with regulation (4) configured to be constrainable to the flange (103) supporting the electrical water heating element (111), the thermostat with regulation (4) comprising:
- an actuation block in turn comprising at least connections to a temperature sensor (115) and at least an actuator for the heating element (111),
- the selector (50),
- a microcontroller adapted to:
- receive an input from the selector (50) of the target temperature for water in the storage water heater (1), by means of an electromechanical transducer (43), the electromechanical transducer (43) being one of an encoder, a potentiometer or a trimmer,
- receive a signal from the at least one temperature sensor (115),
- control the at least one actuator,
and comprising integrated in a single device:
- the connections to the at least one temperature sensor (115);
- a thermostat board (40), in turn comprising:
- electronic means for the control of the temperature for water in the storage water heater (1);
- at least one electrical connector (102.b) for the power supply of said heating element (111);
- fastening means (102.b) to the flange (103),
- the electromechanical transducer (43),
**characterised in that** the thermostat with regulation (4) further comprises:
a kinematic chain (5) connecting the selector (50) to the electromechanical transducer (43), the kinematic chain (5)
starting from the selector (50), configured to engage a dragged element (60; 61)
continuing with the dragged element (60; 61) which is couplable with said electromechanical transducer (43) with which the kinematic chain (5) ends wherein the kinematic chain (5) comprises a slack and disengageable coupling comprising a clearance between the selector (50) and the dragged element (60; 61).

2. Thermostat with regulation (4) according to claim 1, **characterised in that** said at least one electrical connector (102.b) coincide with the fastening means (102.b).

3. Thermostat with regulation (4) according to any one of the previous claims, and further comprising mechanical stop means (624; 424) configured to prevent the dragged element (60, 62) from forcing a movable part of said transducer (43) beyond an allowed travel interval.

4. Thermostat with regulation (4) according to any one of the previous claims,
**characterised in that**
said dragged element (60) comprises two parts mutually couplable to each other whereof a first dragged part (61) has an end couplable with said selector (50), and a second part (62) has a dragging end (623) couplable with said transducer (43).

5. Thermostat with regulation (4) according to any one of the previous claims,
**characterised in that**
said selector (50) is a knob (50) that may be rotated by a user and said transducer (43) is of the rotary type.

6. Thermostat with regulation (4) according to claims 4 and 5, **characterised in that** the dragged element (60) comprises a fin (611)
and the selector (50) in its inner part (51) comprises a cavity (501) adapted to engage the fin (611) and that the fin (611) is oriented radially with respect to the rotation axis of the dragged element (60) and has a lever function that facilitates the rotary movement of said dragged element (60).

7. Thermostat with regulation (4) according to claim 6, **characterised in that**
said first dragged part (61) is a lug (61) comprising the fin (611) that engages in the cavity (501) obtained inside (51) said selector (50) realising the slack and disengageable coupling and said second part (62) is a pin (62) couplable to said lug (61) and dragged therefrom, with a sufficiently tight coupling so as not to allow slidings of the pin (62) relative to the lug (61).

8. Thermostat with regulation (4) according to the previous claim, further comprising a casing, the casing comprising at least a covering half-shell (48) and wherein
said pin (62) at said dragging end (623) is inserted in a suitable opening (425) obtained on said half-shell (48) at said transducer (43) and has at least one arm (622) adapted to realise a mechanical constraint with an elastic coupling termination that prevents said pin (62) from coming out of said opening (425) once it has been inserted therein, where the length of said arm (622) is such that said elastic coupling termination snaps when said end (623) of said pin (62) is inserted for a length sufficient to transmit the movement to said transducer (43) but less than that which could cause critical interferences with said transducer (43) or with the supporting printed circuit.

9. Thermostat with regulation (4) according at least to claims 3, 4, and 5, further comprising a casing, the casing comprising at least a covering half-shell (48) and wherein
said dragged element (60, 62), at said dragging end (623), is inserted into a suitable opening (425) obtained on said half-shell (48) at said transducer (43), said mechanical stop means (624; 424) realising the travel end of said pin (62) comprising a curved projection (624) that increases the radius of said pin (62) for a first arc α, and an end stop (424) that describes a second arc β along the edge of said opening (425), such that the sum of said first arc α and said second arc β is equal to the supplementary angle with respect to the travel angle of said transducer (43).

10. Thermostat with regulation (4) according to any one among the previous claims, **characterised in that** said dragged element (60) comprises elements adapted to perform the functions of a cardan joint.

11. Water heater (1) comprising a tank (113), a flange (103), an electric heating element (111), a temperature sensor (115), a casing (114), a cap (120) and a selector (50) wherein, the electric heating element (111) and temperature sensor (115) are constrained to the flange (103), the flange (103) is in turn constrained to the tank (113), the tank is constrained to the casing (114), the water heater (1) **characterised in that** it comprises: a thermostat with regulation (4) according to any one of claims 1 to 10 and **in that** the casing (114) is slidingly coupled with at least a degree of freedom to the selector (50).

12. Water heater (1) according to the previous claim, **characterised in that** the selector (50) is slidingly coupled, with at least one degree of freedom and in a position accessible to the user, directly with a cap (120) in turn constrained to the casing (114).

## Patentansprüche

1. Thermostat mit Regelung (4) zur Steuerung eines elektrischen Wasserheizelements (111) für einen Warmwasserspeicher (1), wobei der Warmwasserspeicher einen Flansch (103) umfasst, wobei der Flansch (103) konfiguriert ist, um an einem Tank (113) befestigt zu werden, wobei der Tank (113) konfiguriert ist, um an einem Gehäuse (114) befestigt zu werden, wobei das Gehäuse (114) an einer Kappe (120) befestigt ist, wobei die Kappe (120) mit einem Wahlschalter (50)einer Solltemperatur für Wasser in dem Warmwasserspeicher (1) gekoppelt ist, wobei der Thermostat mit Regelung (4) konfiguriert ist, um an dem Flansch (103) befestigt zu werden, der das elektrische Wasserheizelement (111) trägt, wobei der Thermostat mit Regelung (4) umfasst:
- einen Betätigungsblock, der seinerseits mindestens Anschlüsse an einen Temperatursensor (115) und mindestens einen Aktuator für das Wasserheizelement (111) umfasst,
- den Wahlschalter (50),
- einen Mikrocontroller, der geeignet ist, um:
- von dem Wahlschalter (50) eine Eingabe der Solltemperatur für Wasser in dem Warmwasserspeicher (1) mittels eines elektromechanischen Wandlers (43) zu erhalten, wobei der elektromechanische Wandler (43) entweder ein Encoder, ein Potentiometer oder ein Trimmer ist,
- ein Signal von dem mindestens einen Temperatursensor (115) zu empfangen,
- den mindestens einen Aktuator zu steuern
und in einer einzigen Vorrichtung integriert umfasst:
- die Anschlüsse an den mindestens einen Temperatursensor (115);
- eine Thermostat-Platine (40), die ihrerseits umfasst:
- elektronische Mittel zur Steuerung der Temperatur des Wassers im Warmwasserspeicher (1);
- mindestens einen elektrischen Anschluss (102.b) für die Stromversorgung des Wasserheizelements (111);
- Befestigungsmittel (102.b) an dem Flansch (103),
- den elektromechanischen Wandler (43),
**dadurch gekennzeichnet, dass** der Thermostat mit Regelung (4) ferner umfasst:
eine kinematische Kette (5), die den Wahlschalter (50) mit dem elektromechanischen Wandler (43) verbindet, wobei die kinematische Kette (5)
von dem Wahlschalter (50) ausgeht, der konfiguriert ist, um in ein gezogenes Element (60; 61) einzugreifen,
mit dem gezogenen Element (60; 61) fortgesetzt wird, das mit dem elektromechanischen Wandler (43) koppelbar ist, mit dem die kinematische Kette (5) endet, wobei die kinematische Kette (5) eine Kopplung mit Spiel und lösbar umfasst, die einen Abstand zwischen dem Wähler (50) und dem gezogenen Element (60; 61) umfasst.

2. Thermostat mit Regelung (4) nach Anspruch 1, **dadurch gekennzeichnet, dass** der mindestens eine elektrische Anschluss (102.b) mit den Befestigungsmitteln (102.b) zusammenfällt.

3. Thermostat mit Regelung (4) nach einem der vorhergehenden Ansprüche und ferner umfassend mechanische Anschlagmittel (624; 424), die konfiguriert sind, um zu verhindern, dass das gezogene Element (60; 62) einen beweglichen Teil des Wandlers (43) über ein zulässiges Bewegungsintervall hinaus zwingt.

4. Thermostat mit Regelung (4) nach einem der vorhergehenden Ansprüche,
**dadurch gekennzeichnet, dass**
das gezogene Element (60) zwei Teile umfasst, die gegenseitig miteinander koppelbar sind, wobei ein erstes gezogenes Teil (61) ein Ende aufweist, das mit dem Wahlschalter (50) koppelbar ist, und ein zweites Teil (62) ein ziehendes Ende (623) aufweist, das mit dem Wandler (43) koppelbar ist.

5. Thermostat mit Regelung (4) nach einem der vorhergehenden Ansprüche,
**dadurch gekennzeichnet, dass**
der Wahlschalter (50) ein Knopf (50) ist, der von einem Benutzer gedreht werden kann, und der Wandler (43) vom Drehtyp ist.

6. Thermostat mit Regelung (4) nach Anspruch 4 und 5, **dadurch gekennzeichnet, dass** das gezogene Element (60) eine Rippe (611) umfasst und der Wahlschalter (50) in seinem inneren Teil (51) einen Hohlraum (501) umfasst, der geeignet ist, um in die Rippe (611) einzugreifen, und dass die Rippe (611) radial in Bezug auf die Drehachse des gezogenen Elements (60) ausgerichtet ist und eine Hebelfunktion hat, die die Drehbewegung des gezogenen Elements (60) erleichtert.

7. Thermostat mit Regelung (4) nach Anspruch 6, **dadurch gekennzeichnet, dass**
das erste gezogene Teil (61) eine Lasche (61) ist, die die Rippe (611) umfasst, die in den Hohlraum (501) eingreift, der im Inneren (51) des Wahlschalters (50) erhalten ist, wodurch die Kopplung mit Spiel und lösbar realisiert wird, und das zweite Teil (62) ein Stift (62) ist, der mit der Lasche (61) koppelbar ist und davon gezogen wird, mit einer ausreichend festen Kopplung, um zu verhindern, dass der Stift (62) relativ zur Lasche (61) gleitet.

8. Thermostat mit Regelung (4) nach dem vorhergehenden Anspruch, ferner umfassend ein Gehäuse, wobei das Gehäuse mindestens eine abdeckende Halbschale (48) umfasst und wobei
der Stift (62) an dem ziehenden Ende (623) in eine geeignete Öffnung (425) eingeführt ist, die an der Halbschale (48) an dem Wandler (43) erhalten ist, und mindestens einen Arm (622) aufweist, der geeignet ist, eine mechanische Beschränkung mit einem elastischen Kopplungsende zu realisieren, die verhindert, dass der Stift (62) aus der Öffnung (425) herauskommt, nachdem er darin eingeführt wurde, wobei die Länge des Arms (622) derart ist, dass das elastische Kopplungsende einschnappt, wenn das Ende (623) des Stifts (62) über eine Länge eingeführt ist, die ausreicht, um die Bewegung auf den Wandler (43) zu übertragen, aber geringer ist als die, die kritische Störungen mit dem Wandler (43) oder mit der tragenden gedruckten Schaltung verursachen könnte.

9. Thermostat mit Regelung (4) nach mindestens den Ansprüchen 3, 4 und 5, ferner umfassend ein Gehäuse, wobei das Gehäuse mindestens eine abdeckende Halbschale (48) umfasst und wobei
das gezogene Element (60; 62) an dem ziehenden Ende (623) in eine geeignete Öffnung (425) eingeführt ist, die an der Halbschale (48) an dem Wandler (43) erhalten ist, wobei die mechanischen Anschlagmittel (624; 424), die das Bewegungsende des Stifts (62) realisieren, einen gekrümmten Vorsprung (624), der den Radius des Stifts (62) für einen ersten Bogen αvergrößert, und einen Endanschlag (424) umfassen, der einen zweiten Bogen β entlang des Randes der Öffnung (425) beschreibt, so dass die Summe des ersten Bogens α und des zweiten Bogens βgleich dem zusätzlichen Winkel in Bezug auf den Bewegungswinkel des Wandlers (43) ist.

10. Thermostat mit Regelung (4) nach einem der vorhergehenden Ansprüche, **dadurch gekennzeichnet, dass** das gezogene Element (60) Elemente umfasst, die geeignet sind, die Funktionen eines Kardangelenks auszuführen.

11. Warmwasserbereiter (1), der einen Tank (113), einen Flansch (103), ein elektrisches Wasserheizelement (111), einen Temperatursensor (115), ein Gehäuse (114), eine Kappe (120) und einen Wahlschalter (50) umfasst, wobei das elektrische Wasserheizelement (111) und der Temperatursensor (115) an dem Flansch (103) befestigt sind, der Flansch (103) seinerseits an dem Tank (113) befestigt ist, der Tank an dem Gehäuse (114) befestigt ist, wobei der Warmwasserbereiter (1) **dadurch gekennzeichnet ist, dass** er umfasst: einen Thermostat mit Regelung (4) nach einem der Ansprüche 1 bis 10 und dadurch, dass das Gehäuse (114) mit mindestens einem Freiheitsgrad gleitend mit dem Wahlschalter (50) gekoppelt ist.

12. Warmwasserbereiter (1) nach dem vorhergehenden Anspruch, **dadurch gekennzeichnet, dass** der Wahlschalter (50) mit mindestens einem Freiheitsgrad und in einer Position, die für den Benutzer zugänglich ist, direkt mit einer Kappe (120) gleitend gekoppelt ist, die ihrerseits an dem Gehäuse (114) befestigt ist.

## Revendications

1. Thermostat à régulation (4) pour contrôler un élément électrique de chauffage de l'eau (111) pour un chauffe-eau à accumulation (1), le chauffe-eau à accumulation comprenant une bride (103), la bride (103) configurée pour être contrainte à un réservoir (113), le réservoir (113) configuré pour être contraint à un boîtier (114), le boîtier (114) contraint à un capuchon (120), le capuchon (120) étant couplé à un sélecteur (50) d'une température de consigne pour l'eau dans le chauffe-eau à accumulation (1), le thermostat avec régulation (4) configuré pour être contraint à la bride (103) supportant l'élément électrique de chauffage de l'eau (111), le thermostat avec régulation (4) comprenant:
- un bloc d'actionnement comprenant à son tour au moins des connexions à un capteur de température (115) et au moins un actionneur pour l'élément chauffant (111),
- le sélecteur (50),
- un microcontrôleur adapté pour:
- recevoir une entrée du sélecteur (50) de la température de consigne de l'eau dans le chauffe-eau à accumulation (1), au moyen d'un transducteur électromécanique (43), le transducteur électromécanique (43) étant un encodeur, un potentiomètre ou un trimmer,
- recevoir un signal de l'au moins un capteur de température (115),
- commander l'au moins un actionneur
et comprenant intégré dans un seul appareil:
- les connexions à l'au moins un capteur de température (115);
- une carte de commande thermostatique (40), comprenant à son tour:
- des moyens électroniques pour le contrôle de la température de l'eau dans le chauffe-eau à accumulation (1),
- au moins un connecteur électrique (102.b) pour l'alimentation dudit élément de chauffage (111);
- les moyens de fixation (102.b) à la bride (103),
- le transducteur électromécanique (43),
**caractérisé par le fait que** le thermostat à régulation (4) comprend en outre:
une chaîne cinématique (5) reliant le sélecteur (50) au transducteur électromécanique (43), la chaîne cinématique (5)
à partir du sélecteur (50), configuré pour engager un élément entraîné (;60; 61)
continuer avec l'élément entraîné (;60; 61) qui est couplé avec ledit transducteur électromécanique (43) avec lequel la chaîne cinématique (5) se termine dans laquelle la chaîne cinématique (5) comprend un couplage à jeu et désengageable comprenant un jeu entre le sélecteur (50) et l'élément entraîné (;60; 61).

2. Thermostat à régulation (4) selon la revendication 1, **caractérisé en ce que** ledit au moins un connecteur électrique (102.b) coïncide avec les moyens de fixation (102.b).

3. Thermostat à régulation (4) selon l'une quelconque des revendications précédentes, et comprenant en outre des moyens d'arrêt mécanique (;624; 424) configurés pour empêcher l'élément entraîné (60, 62) de forcer une partie mobile dudit transducteur (43) au-delà d'un intervalle de déplacement autorisé.

4. Thermostat à régulation (4) selon l'une quelconque des revendications précédentes, **caractérisé en ce que**
ledit élément entraîné (60) comprend deux parties mutuellement accouplées, dont une première partie traînée (61) a une extrémité accouplable avec ledit sélecteur (50), et une seconde partie (62) a une extrémité traînante (623) accouplable avec ledit transducteur (43).

5. Thermostat à régulation (4) selon l'une quelconque des revendications précédentes, **caractérisé en ce que**
ledit sélecteur (50) est un bouton (50) qui peut être tourné par un utilisateur et ledit transducteur (43) est du type rotatif.

6. Thermostat à régulation (4) selon les revendications 4 et 5, **caractérisé par le fait que** l'élément entraîné (60) comprend une ailette (611)
et le sélecteur (50) dans sa partie intérieure (51) comprend une cavité (501) adaptée pour engager l'ailette (611) et que l'ailette (611) est orientée radialement par rapport à l'axe de rotation de l'élément entraîné (60) et a une fonction de levier qui facilite le mouvement rotatif dudit élément entraîné (60).

7. Thermostat à régulation (4) selon la revendication 6, **caractérisé par le fait que**
ladite première partie traînée (61) est une patte (61) comprenant l'ailette (611) qui s'engage dans la cavité (501) obtenue à l'intérieur (51) dudit sélecteur (50) réalisant l'accouplement à jeu et désengageable et ladite deuxième partie (62) est une broche (62) accouplable à ladite patte (61) et traînée de celle-ci, avec un accouplement suffisamment serré pour ne pas permettre les glissements de la broche (62) par rapport à la patte (61).

8. Thermostat à régulation (4) selon la revendication précédente, comprenant en outre un boîtier, le boîtier comprenant au moins une demi-coque (48) de recouvrement et dans lequel
ladite broche (62) à ladite extrémité traînante (623) est insérée dans une ouverture (425) appropriée obtenue sur ladite demi-coque (48) au niveau dudit transducteur (43) et possède au moins un bras (622) adapté pour réaliser une contrainte mécanique avec une terminaison d'accouplement élastique qui empêche ladite broche (62) de sortir de ladite ouverture (425) une fois qu'elle y a été insérée, où la longueur dudit bras (622) est telle que ladite terminaison d'accouplement élastique s'enclenche lorsque ladite extrémité (623) de ladite broche (62) est insérée sur une longueur suffisante pour transmettre le mouvement audit transducteur (43), mais inférieure à celle qui pourrait causer des interférences critiques avec ledit transducteur (43) ou avec le circuit imprimé de support.

9. Thermostat à régulation (4) selon au moins les revendications 3, 4 et 5, comprenant en outre un boîtier, le boîtier comprenant au moins une demi-coque de recouvrement (48) et dans lequel
ledit élément entraîné (60, 62), à ladite extrémité traînante (623), est inséré dans une ouverture (425) appropriée obtenue sur ladite demi-coque (48) au niveau dudit transducteur (43), lesdits moyens d'arrêt mécanique (;624; 424) réalisant l'extrémité de course de ladite broche (62) comprenant une projection courbe (624) qui augmente le rayon de ladite broche (62) pour un premier arc α, et une butée (424) qui décrit un second arc β le long du bord de ladite ouverture (425), de telle sorte que la somme dudit premier arc α et dudit second arc β soit égale à l'angle supplémentaire par rapport à l'angle de course dudit transducteur (43).

10. Thermostat à régulation (4) selon l'une quelconque des revendications précédentes, **caractérisé en ce que** ledit élément entraîné (60) comporte des éléments aptes à remplir les fonctions d'un joint de cardan.

11. Chauffe-eau (1) comprenant un réservoir (113), une bride (103), un élément de chauffage électrique (111), un capteur de température (115), un boîtier (114), un capuchon (120) et un sélecteur (50) dans lequel l'élément de chauffage électrique (111) et le capteur de température (115) sont contraints à la bride (103), la bride (103) est à son tour contrainte au réservoir (113), le réservoir est contraint au boîtier (114), le chauffe-eau (1) **caractérisé en ce qu'**il comprend: un thermostat à régulation (4) selon l'une quelconque des revendications 1 à 10 et **en ce que** le boîtier (114) est couplé de manière coulissante avec au moins un degré de liberté au sélecteur (50).

12. Chauffe-eau (1) selon la revendication précédente, **caractérisé en ce que** le sélecteur (50) est couplé de manière coulissante, avec au moins un degré de liberté et dans une position accessible à l'utilisateur, directement avec un capuchon (120) à son tour contraint au boîtier (114).
